# EUROPEAN PATENT APPLICATION

(11) **EP 1 492 364 A1**
(43) Date of publication of application: **29.12.2004**
(21) Application number: 03292198.3
(22) Date of filing: 08.09.2003
(51) Int. Cl.: H04Q 7/32, H04Q 7/38

(54) **Method and registration server for over-the-air activation of an additional radio interface provided in a multi-mode radio user terminal**

(30) Priority: 26.06.2003 EP 03291525
(71) Applicant: ALCATEL, 75008 Paris (FR)
(72) Inventor: Maillard, Hervé, 91430 Igny (FR); Kumar, Vinod, 75005 Paris (FR)
(74) Representative: Dreiss, Fuhlendorf, Steimle & Becker

(57) **Abstract**

The present invention refers to a method and to a registration server (7) for activating a radio interface (3) provided in a radio user terminal (1). The user terminal (1) comprises at least one first radio interface (2) compliant with at least one first network standard, e. g. GPRS, and a further radio interface (3) to be activated compliant with a further network standard, e. g. WLAN. At least one of the first radio interfaces (2) is already activated at the time of activation of the further radio interface (3). In order to simplify activation of the radio interface (3), it is suggested that the further radio interface (3) is activated over the air (5) using the at least one first radio interface (2) already activated for transmitting activation parameters to the user terminal (1) for activating the further radio interface (3).

## Description

The present invention refers to a method for activating a radio interface provided in a radio user terminal. The user terminal comprises at least one first radio interface compliant with at least one first network standard and a further radio interface to be activated compliant with a further network standard. At least one of the first radio interfaces is already activated at the time of activation of the further radio interface.

Furthermore, the invention refers to a registration server dedicated to perform online activation of a radio interface provided in a radio user terminal. The user terminal comprises at least one first radio interface compliant with at least one first network standard and a further radio interface to be activated compliant with a further network standard. At least one of the first radio interfaces is already activated at the time of activation of the further radio interface.

Finally, the present invention refers to a radio user terminal comprising at least two radio interfaces, the first radio interface being compliant with a first network standard and a further radio interface being compliant with a further network standard. The first radio interface is already activated at the time of activation of the further radio interface.

In the prior art different types of radio user terminals with multiple radio interfaces are known. One or more first radio interface provided in the user terminal are compliant with one or more first network standards. A further radio interface provided in the user terminal is compliant with a further network standard. The definition of a network standard includes a set of carriers on which the user terminal compliant with this standard is supposed to work.

Generally, the carriers and/or parameters related to the different standards are hard wired in the user terminals during the manufacturing process. Networks compliant to the different network standards are operated by different network operators. Operators operating network complying with the same standard, share the set of carriers related to that standard.

For example, a dual-mode radio user terminal may comprise a first radio interface compliant with a GPRS (General Packet Radio Service)-standard and a second radio interface compliant with a WLAN (Wireless Local Area Network)-standard. The GPRS-network is operated by a first operator and the WLAN-network is operated by a second operator. In Europe, the set of carriers in GSM (Global System for Mobile Communication) is composed of 200 kHz-carriers in the bands of 900 MHz and 1800 MHz. In UMTS (Universal Mobile Telephone Service) the set of carriers is composed by about 12 carriers of 5 MHz in the 1900 MHz-band. A radio user terminal according to the present invention can be any type of mobile phone, smart phone, or computer, in particular palm top, PDA (Personal Digital Assistant) or lap top, equipped with the appropriate hardware and software for accessing radio communication networks compliant with the various network standards.

When purchasing a radio user terminal with multiple radio interfaces, usually only one of the radio interfaces is activated and speech and other data can be transmitted and received over the air only using the one activated radio interface. If the user of the user terminal wants to subscribe to a further network operator, the user has to (physically) go to a front office of the further network operator to have the further radio interface activated and his user terminal customized accordingly.

Returning to the above example, the GPRS-radio interface of the user terminal is already activated. If the user of the user terminal additionally wants the WLAN-radio interface to be activated, at present he has to physically go to a front office of the WLAN-network operator to have the WLAN-radio interface of his user terminal activated and his user terminal customized accordingly.

When activating a radio interface of a user terminal, it is an important issue for the network operator to customize the properties and the behavior of the user terminal. For instance, the customization of the user terminal includes the following features: The user terminal (and/or a smart card or a SIM (Subscriber Identity Module) card inserted in the user terminal) shall
- know to which network operator it belongs,
- have a list of favorite foreign networks to use when roaming,
- receive credentials for authentication purposes.

For this purpose, information specific to the network operator, is directly transmitted to the user terminal (and/or to a smart card or a SIM-card inserted in the user terminal) during the activation process of the radio interface in the network operator's front office. Hence, service activation comprises a number of configuration operations to be performed in the network and in the user terminal and/or on a smart card or a SIM-card inserted into the terminal during the subscription phase, in order to make the desired service available.

The above-mentioned has the disadvantage that a user has to physically move for having a further radio interface of his user terminal activated. This constitutes a high barrier for the user and may cause him not to activate a further radio interface of his user terminal, after all. In general, this may reduce acceptability of multi-mode user terminals.

Therefore, it is an object of the present invention to simplify activation of a further radio interface of a radio user terminal.

To solve this object, a method for activating a first radio interface of the above-mentioned kind is suggested, characterized in that the further radio interface is activated over the air using a first radio interface already activated for transmitting activation parameters to the user terminal for activating the further radio interface.

In other words, an already existing radio communication link between a user terminal and a first radio network operated by a first network operator is used for transmitting activation parameters to the user terminal for activating a further radio interface in order to use the service of a further network operator. By activating the further radio interface over the air the user does no longer have to physically move to a front office of the further network operator, who operates the further radio network compliant with the further network standard. Activation of the radio interface is highly simplified and service is improved by far. At long sight the present invention can enhance acceptability of multi-mode user terminals.

According to a preferred embodiment of the present invention it is suggested that the activation parameters are transferred from an operator of a network compliant with the further network standard to an operator of a network compliant with the at least one first network standard. Of course, this embodiment implies some kind of agreement between the operators of the different networks. There must be an interface between the two networks for transmitting the activation parameters from the operator of the further network to the operator of the first network.

Furthermore, it is suggested that the operator of the network compliant with the first network standard transmits the activation parameters to the user terminal over the air. From the first network the activation parameters are forwarded to the user terminal across the existing radio communication link and the already activated first radio interface.

There are various possibilities of processing and storing the activation parameters comprising the configuration information within the user terminal. It is possible that the activation parameters are stored in appropriate internal storing means of the user terminal. Alternatively, it is possible that the activation parameters are stored in external storing means of a smart card or a SIM-card inserted into the user terminal. Preferably, the activation parameters comprise the name or an identification of the operator of the further network to be activated, a list comprising favorite foreign network operators to be used when roaming and/or credentials for authentication purposes.

According to another preferred embodiment of the invention it is suggested that the method is initiated by the user of a user terminal when accessing a registration server dedicated to perform online activation of the further radio interface. The registration server can be accessed in many different ways. For example, the user could access the registration server from a conventional computer across a computer network, like an intranet or the internet. Further, the registration server could be accessed by sending a SMS (Short Message Service) or any other kind of message from the user terminal to the registration server. When accessing the registration sever, preferably an identification of the user terminal and information on the radio network standard to be activated is transmitted.

Furthermore, it is suggested that information concerning the further radio interface to be activated is transmitted to the registration server, too.

Transmission of the information on the further radio network standard to be activated can be transmitted via a computer network, in particular via an intranet or the internet, via e-mail (electronic mail)-messages, SMS-messages or any other possible way. One idea is to assign a telephone number to the registration server and to call this telephone number in order to access the registration server.

According to a preferred embodiment of the present invention it is suggested that the registration server is accessed over the air using a first radio interface already activated. This embodiment has the advantage that no additional means (computer, Internet-connection, etc.) are needed for accessing the registration server and for activating the radio interface according to a desired radio network standard.

It is suggested that an identifier of the user terminal be transmitted from the user terminal to the registration server. For example, the identifier can be a telephone number or any other kind of identification number of the user terminal. The transmission of the identifier of the user terminal is necessary in order to enable the registration server to transmit the activation parameters to the user terminal for activating the radio interface. Of course, additional data can be sent from the user terminal to the server, for example a service profile, capabilities, etc.

Finally, it is suggested that the activation parameters are transmitted over the air from the registration server to the user terminal.

Furthermore, for solving the above object, a registration server of the above-mentioned kind is suggested, characterized in that the registration server comprises
- means for receiving a request for activation of the further radio interface; and
- means for transmitting activation parameters to the user terminal for activating the further radio interface over the air across a first radio interface already activated.

According to a preferred embodiment of the invention it is suggested that the registration server comprises means for receiving information concerning the further radio interface to be activated.

It is further suggested that the means for receiving the request for activation of the further radio interface receive the request over the air across a first radio interface of the radio user terminal already activated.

Preferably, it is suggested that the registration server comprises means for receiving an identifier of the user terminal from the user terminal.

Finally, it is suggested that processes for identification, authentication and/or authorization of a user are those carried out by the first radio interface used for service activation of the further radio interface.

Furthermore, for solving the above object, a radio user terminal of the above-mentioned kind is suggested, characterized in that the user terminal comprises first means for receiving activation parameters across the first radio interface and second means for activating the further radio interface according to the received activation parameters.

According to a preferred embodiment of the invention the second means carry out processes for identification, authentication and/or authorization of a user of the user terminal after receipt of the activation parameters across the first radio interface and before service activation of the further radio interface.

Finally, it is suggested that after receipt of the activation parameters across the first radio interface the second means customize the user terminal according to the received activation parameters. By customizing the user terminal the properties and the behavior of the user terminal may be adjusted according to information making part of the activation parameters.

Preferred embodiments of the present invention can be taken from the enclosed drawings and the following description of the drawings. All features described in the drawings, the description and the claims are part of the present invention.
- Figure 1: shows a radio network environment for execution of the method according to the present invention; and
- Figure 2: shows a flow chart of the method according to the present invention in a preferred embodiment.

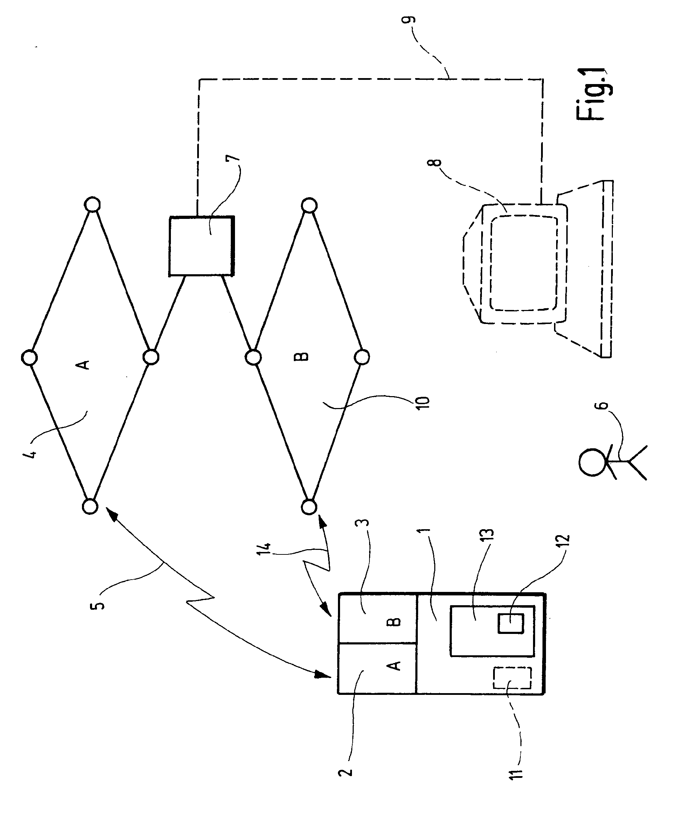

In figure 1 a radio user terminal is designated with reference sign 1. The user terminal 1 is a mobile phone. Of course, the user terminal 1 could be a smart phone or any kind of computer (palm top, PDA, or personal computer) equipped with the appropriate hardware and software for effecting data transmission and data reception according to a certain radio network standard, too. Further, the user terminal 1 could be a multi-mode radio card phone (e. g. PC-card type II) to be inserted into a card slot of a compatible laptop or PDA.

The user terminal 1 has multiple radio interfaces compliant with different network standards. The embodiment of the user terminal 1 shown in figure 1 has two radio interfaces, a first radio interface 2 compliant with a first network standard and a further radio interface 3 compliant with a further network standard. The first network standard is, e. g., GPRS (General Packet Radio Service), and the second network standard could be WLAN (Wireless Local Area Network). Other network standards are, e. g., HSCSD (High Speed Circuit Switched Data).

During the manufacturing process of the user terminal 1, the radio interfaces 2, 3 are hard wired within the user terminal 1. However, when purchasing the user terminal 1, usually only one of the user interfaces, in the present embodiment the first user interface 2, is activated. Speech data and other type of data is transmitted across a first network 4 compliant to the GPRS-network standard over the air 5.

In order to activate the further radio interface 3, too, a user 6 of the user terminal 1 accesses a registration server 7 and initiates an online registration procedure of the further radio interface 3. The user 6 can access the registration server 7 across the first radio interface 2 already activated, the over-the-air data connection 5 and the first network 4. Alternatively, the user 6 can access the registration server 7 using a conventional computer 8, like a palm top, a PDA, or a PC, which can be connected to the registration server 7 across a conventional computer network, like an intranet or the internet 9.

Information concerning the further WLAN radio interface 3 to be activated and information assigned to the user terminal 1 is transmitted to the registration server 7, either from the user terminal 1 or from the computer 8. The registration server 7 uses the information received for creating appropriate activation parameters to be transmitted to the user terminal 1 in order to activate the further WLAN radio interface 3. The activation parameters comprise a name or an identifier of a network operator operating the further network 10 compliant with the further network standard, a list of favorite foreign networks to be used when roaming, customization parameters for embedded applications (e.g. browser bookmarks) and/or credentials for authentication purposes. The activation parameters are transmitted from the registration server 7 across the first GPRS network 4, the GPRS radio connection 5 and the first GPRS radio interface 2, to the user terminal 1. Within the user terminal 1 the activation parameters can either be stored in appropriate internal storing means 11 or in external storing means 12 of a smart card or a SIM (Subscriber Identity Module) card 13. By storing the activation parameters, the user terminal 1 is customized and the further WLAN radio interface 3 is activated and data can be transmitted from and received by the user terminal 1 across a further over-the-air connection 14. From now on, the user 6 of the user terminal 1 can choose between the GPRS network 4 and the WLAN network 10 for data transmission. The appropriate network 4, 10 can be selected according to maximum data transmission rates of the networks 4, 10, availability of the networks 4, 10 and/or costs for using the networks 4, 10.

The advantage of the present invention is the fact that a radio interface 3 of a user terminal 1 can be activated without the user 6 of the user terminal 1 having to physically move, e. g. to a front office of the network operator of the further WLAN network 10, in order to customize the user terminal 1 and to activate the further WLAN radio interface 3.

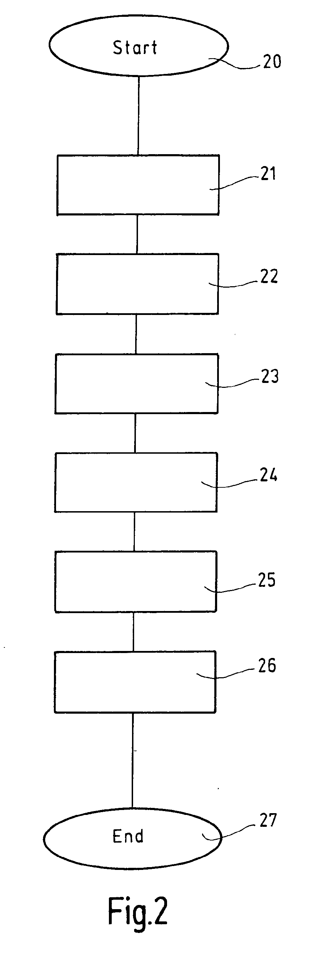

Figure 2 shows a flow chart of the method according to the present invention in a preferred embodiment. The method starts in a functional block 20. In a functional block 21 the user terminal 1 is operated in a conventional way transmitting and receiving data across the GPRS over-the-air connection 5 to and from the GPRS network 4. In a functional block 22 the activation of the further WLAN radio interface 3 is requested by accessing the registration server dedicated to perform online activation of the further WLAN radio interface 3. In functional block 23 the registration server 7 receives information assigned to the user terminal 1 and information concerning the radio interface 3 to be activated and generates activation parameters and configuration information. The activation parameters and the configuration information are transmitted to the GPRS network operator. In functional block 24 the activation parameters and the configuration information are transmitted from the GPRS network operator to the user terminal 1 across the GPRS over-the-air connection 5. In functional block 25 the activation parameters and the configuration information are stored in the internal storing means 11 of the user terminal 1 and/or in the external storing means 12 of the smart card or the SIM card 13 inserted in the user terminal 1. The activation parameters and the configuration information is installed in the user terminal 1 and the further WLAN radio interface 3 is activated. In functional block 26 the user 6 can select either the GPRS network standard or the WLAN network standard for transmitting and receiving data. In functional block 27 the method according to the present invention is terminated.

## Claims

1. Method for activating a radio interface (3) provided in a radio user terminal (1), the user terminal (1) comprising at least one first radio interface (2) compliant with at least one first network standard and a further radio interface (3) to be activated compliant with a further network standard, and at least one of the first radio interfaces (2) being already activated at the time of activation of the further radio interface (3), **characterized in that** the further radio interface (3) is activated over the air (5) using a first radio interface (2) already activated for transmitting activation parameters to the user terminal (1) for activating the further radio interface (3).

2. Method according to claim 1, **characterized in that** the activation parameters are transferred from an operator of a network (10) compliant with the further network standard to an operator of a network (4) compliant with the at least one first network standard.

3. Method according to claim 2, **characterized in that** the operator of the network (4) compliant with the first network standard transmits the activation parameters to the user terminal (1) over the air (5).

4. Method according to claim 2 or 3, **characterized in that** the activation parameters are stored in the user terminal (1) and/or in a smart card or a SIM card (13) inserted into the user terminal (1).

5. Method according to one of the claims 1 to 4, **characterized in that** the method is initiated by a user (6) of the user terminal (1) when accessing a registration server (7) dedicated to perform online activation of the further radio interface (3).

6. Method according to claim 5, **characterized in that** information concerning the further radio interface (3) to be activated is transmitted to the registration server (7).

7. Method according to claim 5 or 6, **characterized in that** the registration server (7) is accessed over the air (5) using a first radio interface (2) already activated.

8. Method according to claim 7, **characterized in that** an identifier of the user terminal (1) is transmitted from the user terminal (1) to the registration server (7).

9. Method according to one of the claims 5 to 8,
**characterized in that** the activation parameters are transmitted over the air (5) from the registration server (7) to the user terminal (1).

10. Registration server (7) dedicated to perform online activation of a radio interface (3) provided in a radio user terminal (1), the user terminal (1) comprising at least one first radio interface (2) compliant with at least one first network standard and a further radio interface (3) to be activated compliant with a further network standard, and at least one of the first radio interfaces (2) being already activated at the time of activation of the further radio interface (3), **characterized in that** the registration server (7) comprises
a. means for receiving a request for activation of the further radio interface (3); and
b. means for transmitting activation parameters to the user terminal (1) for activating the further radio interface (3) over the air (5) across a first radio interface (2) already activated.

11. Registration server (7) according to claim 10, **characterized in that** the registration server (7) comprises means for receiving information concerning the further radio interface (3) to be activated.

12. Registration server (7) according to claim 10 or 11, **characterized in that** the means for receiving the request for activation of the further radio interface (3) receive the request over the air (5) across a first radio interface (2) already activated.

13. Registration server (7) according to claim 12, **characterized in that** the registration server (7) comprises means for receiving an identifier of the user terminal (1) from the user terminal (1).

14. Registration server (7) according to one of the claims 10 to 13, **characterized in that** processes for identification, authentication and/or authorization of a user (6) are those carried out by the first radio interface (2) used for service activation of the further radio interface (3).

15. Radio user terminal (1) comprising at least two radio interfaces (2, 3), the first radio interface (2) being compliant with a first network standard and a further radio interface (3) being compliant with a further network standard, **characterized in that** the user terminal (1) comprises first means for receiving activation parameters across the first radio interface (2) and second means for activating the further radio interface (3) according to the received activation parameters.

16. Radio user terminal (1) according to claim 15, **characterized in that** the second means carry out processes for identification, authentication and/or authorization of a user (6) of the user terminal (1) after receipt of the activation parameters across the first radio interface (2) and before service activation of the further radio interface (3).

17. Radio user terminal (1) according to claim 15 or 16, **characterized in that** after receipt of the activation parameters across the first radio interface (2) the second means customize the user terminal (1) according to the received activation parameters.
